# EUROPEAN PATENT APPLICATION

(11) **EP 4 748 529 A1**
(43) Date of publication of application: **27.05.2026**
(21) Application number: 25165548.6
(22) Date of filing: 24.03.2025
(51) Int. Cl.: B23K 35/02, B23K 35/28, B23K 35/40, C22C 1/08, C22C 21/02

(54) **METHOD OF PRODUCING METALLIC FOAM, WELDING ELECTRODE AND METALLIC FOAM OBTAINED BY THIS METHOD**

(30) Priority: 20.11.2024 PL 45031524
(71) Applicant: Akademia Gorniczo-Hutnicza im. Stanislawa Staszica w Krakowie, 30-059 Krakow (PL)
(72) Inventor: PIOTROWICZ, Andrzej, 97-400 Belchatów (PL); NOGA, Piotr, 34-382 Bystra (PL); SKRZEKUT, Tomasz, 31-345 Kraków (PL)
(74) Representative: Pietruszynska, Elzbieta

(57) **Abstract**

A method of producing metallic foam, comprising the following sequential steps: producing a metallic foam precursor by machining; producing a compact by compacting the metallic foam precursor; producing a welding electrode by plastic consolidation of the compact produced in the previous step; and producing metallic foam by welding or hardfacing by means of the welding electrode produced in the previous step, wherein the metallic foam precursor is the waste material from the machining of the aluminium material; and a welding electrode and metallic foam obtained by this method.

## Description

### Technical Field

The subject matter of the invention relates to a method of producing metallic foam. The invention generally concerns methods of bonding metallic materials, more specifically it concerns welding techniques, in particular methods of welding or hardfacing aluminium. The subject matter of the invention further relates to a welding electrode and metallic foam obtained by this method.

### Background Art

Metallic foams are a modern composite material of metal-gas type. They have many advantageous properties, *inter alia* low specific weight, high porosity, and they also provide the possibility of modifying free surface in order to change the functional properties; nevertheless, metallic foams are not widely used due to relatively expensive methods of producing them. The metallic foams used in industrial practice are almost exclusively aluminium alloys.

The existing methods of producing metallic foams are described by A. Kulshreshtha and S. K. Dhakad in a review publication titled "Preparation of metal foam by different methods: A review" in Materials Today: Proceedings, 2020, Vol. 26, Part 2, pp. 1784-1790, ISSN 2214-7853, doi:10.1016/j.matpr.2020.02.375. The production of such foams can be carried out in various ways, e.g. by casting foams into a preform and then removing the preform; powder sintering (powder metallurgy); or by the heat treatment of a mixture of metal and a foaming agent (e.g. hydride).

The document CN 102601509 A describes an invention concerning a method of producing a metallic foam sandwich (i.e. a structure consisting of two metal sheets with metal foam between them), comprising the following steps: (a) placing aluminium sheets on electrodes with free space maintained between the sheets; (b) placing metallic foam between the aluminium sheets; and (c) pressing and simultaneous welding of the aluminium sheets with metallic foam, as a result of which a metallic foam sandwich is formed. Although this method has a number of advantages, such as no need to apply further heat treatment procedures, simplicity and possible implementation on a larger scale, it is limited only to the production of a predetermined composite of metal sheet and metallic foam. In this method, metallic foam is produced by conventional methods and then it is welded with aluminium sheet, so that the weld produced by this method is solid (homogenous).

The document JP 2007-237198 A discloses another invention concerning a method of welding metallic foams of aluminium, comprising: (a) arranging together the metallic foam items to be joined, so that they have a common line of joint; (b) placing a filler material in the line of joint, consisting of the same material as the metallic foams to be joint or containing at least one common component; and (c) welding the metallic foam items and the filler material in the line of joint using the MIG method. As a result**,** a durable solid bonding of the joined metallic foams is formed in the line of joint. In this invention, various welding techniques can be used, e.g. MIG, laser, etc. In this method, metallic foam is not formed as a result of welding.

The document US 8820610 B2 concerns precursors for the production of metallic foams whose both porosity and chemical composition are functionally gradient. The publication also describes a method for producing such foams from precursors, comprising: (a) the step of forming a plurality of metallic foam precursors by forming a plurality of assemblies each including metal items and porophores, which contact each other; and (b) the step of friction stir welding on each of the plurality of assemblies, so that the porophores are caused to disperse within the metal items that are joined to each other. The metallic foam described in that document is formed due to the presence of a porophores in a precursor, and thus the metallic foam is produced by a method of heat treatment with a foaming agent (porophore).

### Detailed Description of the Invention

It results from the prior art cited above, that a technology that would enable welding metallic foams without loss of the foam properties at the place of joint would be highly desirable. Firstly, the joined items would constitute a metal foam as a whole, so welding them would not be a factor limiting the properties of the newly formed metallic foam. Secondly, welding is a process that can be automated and thus the joining of metallic foam items would be repeatable, relatively quick and low-cost. Finally, welding metallic foams makes it possible to obtain any shapes from raw ingots of metallic foams, which will significantly broaden the application of metallic foams joined in this way.

### Technical problem

The technical problem is to provide an alternative method of obtaining metallic foam from an aluminium alloy as a result of the process of welding or hardfacing of at least one aluminium surface. The foam obtained by this method will be a material of lower specific weight and higher porosity relative to typical fillers used so far.

Another problem is to provide metallic foam and a welding electrode obtained by a different, new and non-obvious method compared to the foams and electrodes currently available in the prior art.

### Summary of invention

The subject of invention is to provide a method of producing metallic foam, characterized in that it comprises the following sequential steps:
- producing a metallic foam precursor by machining;
- producing a compact by compacting the metallic foam precursor;
- producing a welding electrode by the plastic consolidation of the compact produced in the previous step; and
- producing metallic foam by welding or hardfacing by means of the welding electrode produced in the previous step,
wherein the metallic foam precursor is waste material from the machining of the aluminium material.

In a preferable aspect of the invention the metallic foam precursor is a material characterized by the following elemental composition expressed in wt.% relative to the entire mass of metallic foam precursor:

| | |
|---|---|
| Al | 85.48-90.37 |
| Si | 7.05-11.08 |
| O | 1.27-2.08 |
| Fe | 0.62-1.00 |
| Mn | 0.00-0.47 |

In this or another preferable aspect of the invention, the aluminium material is silumin. In this or another preferable aspect of the invention the aluminium material is the AlSi11 alloy.

In this or another preferable aspect of the invention, the welding or hardfacing is welding or hardfacing selected from the group of welding methods: MIG/MAG, TIG or MMA**.**

In this or another preferable aspect of the invention, welding or hardfacing is welding or hardfacing by the MIG method.

Furthermore, the subject of the invention is to provide a welding electrode obtained by the method according to the invention as defined above and to provide metallic foam obtained by the method according to the invention as defined above.

There are many welding methods: MIG/MAG, TIG, MMA**,** gas welding, laser beam welding, etc. In the large-scale industrial practice, MIG/MAG and TIG welding are most frequently used due to the fact that scaling and automation are possible. Electrodes for TIG welding are made of relatively expensive tungsten so, if possible, MIG/MAG welding is used instead of TIG. In the case of welding aluminium, it is advisable that the consumable electrode contains at least one the same component as the items to be joined. Consumable electrodes can be made entirely of aluminium but usually they contain a few percent addition of e.g. manganese or copper. The requirements concerning the chemical composition of such a consumable electrode made of aluminium are not very rigorous.

Therefore, it is obvious for the person skilled in the art that the welding or hardfacing according to the invention can be selected from a wider group of welding methods comprising: MIG/MAG, TIG, MMA, wherein preferable is welding and hardfacing selected from the group: MIG/MAG or TIG, with particularly preferable MIG.

Unless clearly stated otherwise, all values of the physical and chemical properties here and in the entire specification should be construed as having been determined with the accuracy of ±10% of given value.

Here and elsewhere in the specification, unless clearly indicated otherwise, the expression "from *x* to *y*", also written in a shortened form as "*x*-*y*", in relation to a range of numerical values should be construed as an interval closed on both sides, which means that the extreme values (x and y) also belong to the said range.

It is obvious for the skilled person that all features that are "in the preferable aspect of the invention" are optional features and can be present or not in the embodiments of the invention and can be freely combined independently of one another as far as it is not contrary to the principles of physics and is technically feasible.

### General procedure of the method according to the invention

The present invention is generally carried out in the following way. Fine aluminium, in the form of chips etc., which is a metallic foam precursor is compacted into the so called compact. The compact is constituted by loosely joined fine aluminium, suitable for the subsequent step of plastic consolidation. Plastic consolidation results in a change of shape: from the compact to a rod, as the preferable shape of a welding electrode is a rod (i.e. a structural item of a cylindrical shape having a possibly small diameter relative to the length). A rod obtained by this method constitutes the welding electrode. Obviously, the skilled person will know that plastic consolidation may result in other shaped pieces, such as flat bars, which may constitute both the electrode and the items to be welded.

Subsequently, the items to be welded are arranged (face-to-face or bevelled), so that they can be welded in the so-called line of joint. The items to be joined are welded in the line of joint by means of the electrode produced by the method according to the invention. In the place of the weld metallic foam is formed.

What proved to be non-obvious was the fact that the use of the electrode produced by the method according to the invention results in the formation of metallic foam in the line of joint, independently of whether the items being joined were items of commonly available commercial solid aluminium alloy or compacted items produced in an analogous way as the welding electrode by the compacting and plastic consolidation according to the invention.

The electrode can obviously by used not only for welding but also as a metallic foam precursor in the hardfacing process; importantly, this should be carried out using electric current flow or Joule's heating.

The details of carrying out the invention are presented in the example below. To show a difference over the prior art, the presented results of welding or hardfacing with the use of the electrode produced by the method according to the invention, that is, obtained as a result of compacting and plastic consolidation of the metallic foam precursor, were compared with the results of welding by means of a conventional electrode (i.e. reference material) of solid material made of the same aluminium alloy.

### Advantageous technical effects

It turned out unexpectedly that the use of the method according to the invention provides an alternative method of obtaining metallic foam from an aluminium alloy as a result of the process of welding or hardfacing of at least one aluminium surface. The foam obtained by this method is a material that has a lower specific weight and higher porosity relative to typical fillers used so far.

### Description of the figures of the drawing

The invention is described in more detail below by means of preferable embodiments presented in the drawing in which:

| | |
|---|---|
| Fig. 1 | shows a perspective top view of differences in the appearance of metallic foams obtained (a) as a result of hardfacing one extruded rod by means of the welding electrode according to the invention (Fig. 1a) and (b) as a result of welding two flat bars by means of the welding electrode according to the invention (Fig. 1b); |
| Fig. 2 | shows a cross-sectional view of a weld made as a result of hardfacing one rod; |
| Fig. 3 | shows a cross-sectional view of a joint of two flat bars. |

The preferable embodiments presented in the figures and examples are intended to illustrate the invention and do not limit it in any way.

### Example

### (a) Producing a metallic foam precursor

The initial material was AlSi11 alloy. Chips of this alloy were prepared by means of a CNC machining tool in the milling process: the end mill was moving spirally where the beginning of the spiral was at the centre of the initial material having a diameter of 40 mm. After each move forward the milling cutter sank into the initial material to the depth of 0.5 mm with the milling cutter rotational speed of 2800 rpm, as a result of which chips of the initial material were formed. The milling was performed without cutting fluid.

### (a1) Elemental composition of the metallic foam precursor

To determine the elemental composition of the metallic foam precursor, 4 samples of the initial material chips were taken for examination. The elemental composition was determined by means of a SU-70 apparatus, Hitachi, Ltd. for scanning electron microscopy with an X-ray detector EDX. The chips were placed directly in the analyser and the measurement was performed without a conductive layer. The results of the measurements were averaged. The elemental composition expressed in wt.% relative to the entire mass of the metallic foam was as follows:

| | |
|---|---|
| Al | 85.48-90.37 |
| Si | 7.05-11.08 |
| O | 1.27-2.08 |
| Fe | 0.62-1.00 |
| Mn | 0.00-0.47 |

### (b) Compacting

The next step was the so-called compacting which involved initial densification of the chips in an electric hydraulic press. After the milling process (as described in step a), approx. 40 g of chips was placed in the cylinder of the press chamber. Under the 250 MPa pressure of the piston the chips were pressed to form compacts, that is discs having a diameter of 40 mm and a height of 10 mm. The compacting was repeated six times using the chips after the milling process, as a result of which 7 compacts were finally formed, which had a total mass of approx. 280 g.

### (c) Plastic consolidation

Plastic consolidation, the purpose of which was to change the shape of the compacts into rods or flat bars, was performed in the process of hot direct extrusion. Six compacts after milling and compacting (as described in steps a and b) were transferred to the press container heated to the temperature of 400 °C, where they were soaked for 30 min, and then extruded at the speed of 1 mm/s. A rod having a diameter of 1 mm and a length of 10 m was obtained. The rod was an electrode in the next step.

Flat bars having dimensions of 15 × 3 mm were obtained in the same conditions of plastic consolidation.

### (d) Welding/hardfacing

Welding or hardfacing with the electrode obtained as a result of plastic consolidation from the chips after the process of milling, compacting and plastic consolidation (as described in steps a, b and c) was carried out on a semiautomatic station for welding by the MIG method. Before the welding process, the edges of the flat bars (produced in step c) were arranged together in the so-called line of joint and bevelled at an angle of 60° to form a shape of letter "Y" in order to ensure total melting of the materials in the line of joint. The distance between the items to be joined was 1 mm, and the thickness of root face was 1.5 mm. The rod made in step c of the present invention was used as an additional material (the welding electrode). Welding was performed according to the following welding parameters: the diameter of the additional material = 1.0 mm; the range of welding current values = 80-100 A; the range of welding arc voltage = 17-19 V; welding speed = 10 mm/s.

The purpose of hardfacing the rod or welding the flat bars with the use of the electrode after plastic consolidation was to confirm that the materials obtained from the process of milling and consolidation produce the foaming effect according to the invention.

### (e) Macroscopic examination of the solid material obtained by the method not according to the invention and the material of chips obtained by the method according to the invention

To compare the conventional materials and the material according to the invention, macroscopic measurements were performed of the solid material obtained in analogous conditions as in the example according to the invention, but using a conventional welding electrode ESAB OK AUTROD 4043 AlSi5 fi 1.0 and the material obtained by the method according to the invention, where both materials were made of the Al 4xxx series(silumin).

The material of chips, as compared to the solid material, had a higher: tensile strength (210 MPa and 165 MPa, respectively) and yield strength (200 MPa and 140 MPa, respectively), at similar elongations, i.e. 24% and 25%, respectively - determined each time for the rods having a diameter of 1 mm by means of a classic statistical tensile examination of a metal on the Zwic Roel Z050 machine.

The specific weight of the material according to the invention at the temperate of 25 °C was lower compared to an analogous solid material not according to the invention and amounted to 0.95 g·cm⁻³. By comparison, the specific weight of AlSi11 alloy at the same temperature is 2.66 g·cm⁻³.

### (f) Microscopic examination

Additionally, the average area of phases rich in silicone was determined, which was 30 µm² in the solid material, and in the material made of chips - 5 µm².

The percentage share of porosity was determined by means of optical microscopy by a method involving a comparison of the share dark fields (pores) relative to the total area of the photo of the examined material. The percentage share of porosity determined in this way in the weld area was approx. 65%, whereas in the case of the flat bar, the percentage share of porosity was 45%. The pore diameters were from several to 1000 µm. In the case of the reference material not according to the invention, the porosity was negligible (solid material) .

### (g) Visual comparison of two materials obtained by the method according to the invention

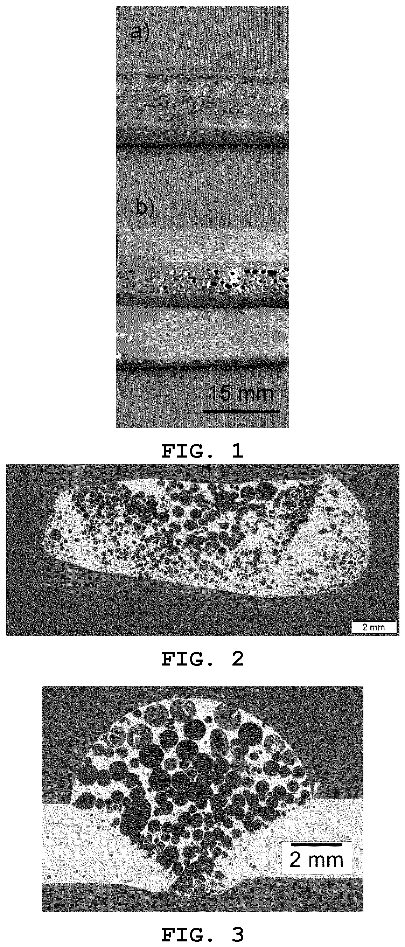

Fig. 1 show differences in the appearance of foams from hardfacing with the electrode obtained from chips in the case of one extruded rod (Fig. 1a) and the electrode from chips in the case of welding two flat bars (Fig. 1b). Whereas the joint presented in Fig. 1a does not have open porosity on the surface, the joint after welding two flat bars (Fig. 1b) has numerous pores and bubbles.

The cross-section of the joint made of one flat bar (Fig. 2) has porosity in its entire volume. The cross-section of the joint made of two flat bars (Fig. 3), on the other hand, exhibits significant porosity found only in the area of the weld.

### Industrial Applicability of the Invention

The method according to the invention can be applied for the production of metallic foams for joining different, compatible with welding processes metallic surfaces used in light structures not requiring a very high mechanical strength, in the case of which low specific weight of a material is more important than mechanical strength or where the porosity of the structure is a technological advantage providing additional artistic value to products.

## Claims

1. A method of producing metallic foam, **characterized in that** the method comprises the following sequential steps:
- producing a metallic foam precursor by machining;
- producing a compact by compacting the metallic foam precursor;
- producing a welding electrode by the plastic consolidation of the compact produced in the previous step;
- producing metallic foam by welding or hardfacing by means of the welding electrode produced in the previous step,
wherein the metallic foam precursor is the waste material from the machining of the aluminium material.

2. The method according to claim 1, **characterized in that** the metallic foam precursor is a material **characterized by** the following elemental composition expressed in wt.% relative to the entire mass of the metallic foam precursor:
| | |
|---|---|
| Al | 85.48-90.37 |
| Si | 7.05-11.08 |
| O | 1.27-2.08 |
| Fe | 0.62-1.00 |
| Mn | 0.00-0.47 |

3. The method according to claim 1 or 2, **characterized in that** the aluminium material is silumin.

4. The method according to any of claims from 1 to 3, **characterized in that** the aluminium material is AlSi11 alloy.

5. The method according to any of claims from 1 to 4, **characterized in that** the welding or hardfacing is welding or hardfacing selected from the group of welding methods: MIG/MAG, TIG or MMA.

6. The method according to claim 5, **characterized in that** the welding or hardfacing is welding or hardfacing by the MIG method.

7. A welding electrode obtained by the method as defined in claim 1.

8. Metallic foam obtained by the method as defined in claim 1.
